# EUROPÄISCHE PATENTANMELDUNG

(11) **EP 3 553 118 A1**
(43) Veröffentlichungstag der Anmeldung: **16.10.2019**
(21) Anmeldenummer: 19000166.9
(22) Anmeldetag: 03.04.2019
(51) Int. Cl.: C08J 9/00, C08K 5/00

(54) **XPS-PLATTEN UND EPS-PLATTEN MIT EINGEARBEITETEM FLAMMSCHUTZ**

(30) Priorität: 12.04.2018 DE 102018002979
(71) Anmelder: Jackon Applications GmbH, 34970 Wismar (DE)
(72) Erfinder: Falge, Joachim, 23689 Luschendorf (DE); Plate, Mark, 21335 Lüneburg (DE)
(74) Vertreter: Kaewert, Klaus

(57) **Zusammenfassung**

Nach der Erfindung wird als Flammschutzmittel/Brandschutzmittel bei der Polystyrolschaumherstellung Lignin zusammen mit mindestens einem weiteren Flammschutzmittel/Brandschutzmittel eingesetzt.

## Beschreibung

Die Erfindung betrifft XPS-Platten und EPS-Platten mit eingearbeitetem Flammschutzmittel, insbesondere zu Bauzwecken.

Polystyrol (PS) ist ein thermoplastischer Kunststoff.

Thermoplaste sind Kunststoffe, die unter Erwärmung erweichen und sich in dem Erweichungszustand verformen lassen und nach Abkühlung die erlangte Form behalten. Dieser Vorgang ist oft wiederholbar.

Zu den Thermoplasten zählen zum Beispiel: Acrylnitril-Butadien-Styrol, (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC).

Polystyrol und Polyolefine wie Polyethylen und Polypropylen gehören zu den Massenkunststoffen.

In obiger Aufzählung finden sich Polymere wie Polycarbonat, Polyethylen, Polypropylen, Polystyrol. Die anderen Kunststoffe sind Copolymere. Das heißt, die Copolymere sind aus verschiedenen Monomeren aufgebaut.

Üblicherweise werden die Kunststoffe zusammen mit Additiven und Füllstoffen verarbeitet. Die Additive sollen dem gewünschten Produkt bestimmte Eigenschaften geben; zum Beispiel erhöhte Festigkeit und/oder erhöhte

Alterungsbeständigkeit und/oder erhöhte Elastizität oder eine höhere Wärmebelastbarkeit. Desweiteren können sie auch dazu dienen die Verarbeitung zu erleichtern.

Die Additive können andere Kunststoffe, Substanzen und Gemische von Substanzen und vieles andere sein; zum Beispiel Fasern, Glaskügelchen, Späne usw.

Die Füllstoffe dienen dazu, den Kunststoff zu strecken.

Mit XPS-Platten werden Polystyrolschaumplatten bezeichnet, die mittels eines Extruders hergestellt werden, wobei
- die Einsatzstoffe einschließlich Polystyrol und Additive und Füllstoffe aufgegeben werden,
- die Treibmittel in die flüssige Polystyrolschmelze eingegeben werden
- das Polystyrol aufgeschmolzen und mit den anderen Einsatzstoffen vermischt wird
- aus dem Extruder durch eine Düse ein endloser Schmelzestrang in eine Umgebung geringeren Druckes austritt und aufschäumt
- der nach Formgebung in einem Kalibrator und
- nach ausreichender Abkühlung als Extrusionsstrang spanabhebend bearbeitet wird
- und zu Platten abgelängt wird.

Mit EPS-Platten werden Polystyrolschaumplatten bezeichnet, die aus Schaumpartikeln hergestellt werden. Die Schaumpartikel werden in einem Formteilautomaten miteinander verschweißt. Dabei entsteht üblicherweise zunächst ein Schaumblock, der anschließend zu gewünschten Platten aufgeteilt wird.

Die Schaumpartikel können auf unterschiedlichen Wegen hergestellt werden. Einer der Wege sieht vor:
- Schmelzeerzeugung wie bei der XPS-Herstellung mit eingeschlossenem Treibmittel
- Austritt verschiedener endloser feiner Schmelzestränge mittels kleiner Düsen,
- wobei die Schmelze nach dem Austritt aus dem Extruder in eine Umgebung hohen Druckes gelangt, so dass ein Aufschäumen verhindert wird
- wobei die Schmelzestränge unter Wasser zu Mikrogranulat, das mit Treibmittel beladen ist, zerkleinert werden.

Das Wasser bewirkt eine Abkühlung, so dass das Treibmittel in dem Granulat eingefroren wird. Danach hat das Granulat eine für den Transport und die Lagerung günstige Form. Vor dem Einsatz in einem Formteilautomaten muss das Granulat aufgeschäumt werden. Das kann in einem oder mehreren Schritten erfolgen, bis aus dem Granulat Schaumpartikel mit den gewünschten Eigenschaften entstanden sind. -die Schaumpartikel werden anschließend in einem Formteilautomaten zu einem Block verarbeitet. Das geschieht nach Einfüllen der Schaumpartikel in den Formteilautomaten durch Bedampfung der Schaumpartikel mit Heißdampf. Durch diese Bedampfung erweichen die Schaumpartikel an der Oberfläche, so dass die verschiedenen Partikel unter dem Druck in dem Formteilautomaten miteinander verschweißen. Nach ausreichender Abkühlung wird der Block aus dem Formteilautomaten entnommen und in Platten geschnitten.

Sowohl die XPS-Platten wie auch die auf vorstehend beschriebenem Weg erzeugten EPS-Platten sind herkömmlich mit einem Flammschutz versehen, der in der oben beschriebenen Form als Zuschlag in den Extruder aufgegeben worden ist. Im Extruder findet eine gleichmäßige Verteilung des Flammschutzes in der Schmelze statt. Dementsprechend ist das Flammschutzmaterial auch gleichmäßig in den XPS-Platten und den EPS-Platten verteilt.

Der Extruder kommt in verschiedenen Bauarten vor, besonders häufig als Einschneckenextruder. Dabei läuft in einem Gehäuse eine Schnecke um, welche den Kunststoff zur Extrusionsdüse transportiert.

Eine andere häufig vorkommende Bauart ist der Doppelschneckenextruder. Dabei sind zwei Schnecken in einem Gehäuse parallel zueinander vorgesehen, die entweder gleichsinnig oder gegenläufig rotieren.

Eine seltenere Bauart ist der Planetwalzenextruder, der aus einem innen verzahnten fest angeordneten Gehäuse, einer mittig umlaufenden Zentralspindel und verschiedenen Planetspindeln besteht, die zwischen dem Gehäuse und der Zentralspindel um die Zentralspindel umlaufen. Die Verzahnung der Planetspindeln kämmt mit der Verzahnung der Zentralspindel und der Innenverzahnung des Gehäuses. Die Zentralspindel wird üblicherweise angetrieben. Die Planetspindeln gleiten an einem Anlaufring des Gehäuses und sind im Übrigen von den Zähnen der Zentralspindel und der Innenverzahnung des Gehäuses bzw. der Buchse gehalten.

Allen Extruderbauarten ist gemeinsam, dass zur Herstellung von Kunststoffschaum eine Schmelze erzeugt und mit Treibmittel versetzt wird. Das Treibmittel wird nach Entstehen der Schmelze als Flüssigkeit in den Extruder eingespritzt.

Im Extruder wird das Treibmittel mit der Schmelze vermischt.

Im Extruder verhindert der dort herrschende Druck ein Aufschäumen des Kunststoffes.

Die Schmelze wird mittels der beschriebenen Düsen in feinen Strängen aus dem Extruder ausgetragen und unter Wasser zu Granulat zerkleinert. Das Wasser kühlt das Granulat, so dass das Treibmittel sich in der Schmelze ausdehnen kann und eingefroren wird.

Die XPS-Platten wie auch die EPS-Platten werden als Bauprodukte eingesetzt. In vielen Ländern ist das nur erlaubt, wenn diese Platten mit einem ausreichenden Flammschutz versehen sind.

Flammschutzmittel können umweltgefährend und/oder gesundheitsgefährlich sein. Manche Flammschutzmittel sind mit dem zu schäumenden Kunststoff nicht kompatibel. Besondere Schwierigkeiten ergeben sich bei der Einmischung von Flammschutzmitteln in Polystyrol.

Außerdem ist die Wirkung vieler Flammschutzmittel gering. Das zeigt sich im Brandfall. Es zirkulieren in den Medien erschreckende Bilder von Fassadenbränden, bei denen eine Wärmedämmung der Fassade aus Polystyrolschaumplatten in Brand geraten ist. Dabei entwickelt sich der Brand mit hoher Geschwindigkeit, sobald der Kunststoff sich durch entsprechende Erwärmung verflüssigt und in der flüssigen Form durch eine Flamme entzündet wird. Für Personen, die sich noch in den zugehörigen Gebäuden befinden, wird das Verlassen der Gebäude extrem schwierig.

Die Flammschutzmittel werden der Polymermatrix zugesetzt, um den Verbrennungsprozess zu hemmen, zu unterdrücken und zu beenden. Sie wirken hauptsächlich auf die Entzündbarkeit des Materials oder verringern die Flammenausbreitung. Dabei sollen sie andere Eigenschaften des Polymers, wie z.B. die Mechanik oder das Aussehen (zum Beispiel die Transparenz, Farbe) möglichst wenig oder gar nicht beeinflussen.

### Im Einzelnen:

Nach Entzünden setzt das brennende Material Wärme frei und verursacht eine zusätzliche Temperaturerhöhung. Dadurch werden Pyrolyseprozesse beschleunigt und weiteres brennbares Material entzündet. Für die Geschwindigkeit der Brandentwicklung sind die Wärmefreisetzung (Wärmeentwicklung) und Entzündbarkeit des Materials und die dadurch bedingte Flammenausbreitung verantwortlich.

Durch starke Wärmeentwicklung und große Gasfreisetzung kann im Laufe des Brandes (besonders bei Raumbränden) ein Gasgemisch entstehen, das eine Brandausdehnung mit sehr hoher Geschwindigkeit verursacht. Dieses plötzliche Zünden und Abbrennen von Pyrolysegasen wird als Rauchgasdurchzünden/feuerüberschlagender Flashover bezeichnet.

Der Brand erreicht seine höchsten Temperaturen. Das gesamte brennbare Material (Brandlast) ist involviert (Branddurchdringung). Die Brandlast ist ausschlaggebend für das Ausmaß des Brandes und den daraus resultierenden Schaden. Erst aus der Erschöpfung einer der Brandkomponenten (brennbares Material oder Sauerstoff) resultiert das Abklingen des Brandes.

Die Flammschutzmechanismus hängen stark von der chemischen Struktur des Flammschutzmittels und seiner Wechselwirkung mit dem Polymer ab. Das grundlegendes Verständnis der Struktur-Eigenschaftsbeziehungen ist die Grundvoraussetzung für die gezielte Entwicklung maßgeschneiderter Flammschutzlösungen und die Optimierung der Flammschutzmechanismen und -wirkung für eine bestimmte Anwendung.

Flammschutzmittel dienen zur Hemmung, im Idealfall zur Vermeidung der Entzündung, Flammenausbreitung und/oder Brandlast. Man kann zwischen physikalischen und chemischen Wirkungsweisen unterscheiden.

### Zu den chemischen Mechanismen:

Mittels einer Reaktion in der Gasphase wird durch das Flammschutzmittel der Radikalmechanismus unterbrochen und somit die Oxidationsreaktion gehemmt, die effektive Verbrennungsenthalpie des Materials sinkt. Dadurch wird der Wärmeeintrag der Flamme verringert und die Wärmefreisetzung reduziert.

Typische Radikalfänger sind halogenhaltige Flammschutzmittel auf Basis von Chlor oder Brom.

### Zu den physikalischen Mechanismen:

Die Abgabe von Wasser bewirkt eine Kühlung der Flamme. Die endotherme Abgabe nicht brennbarer Gase wie H₂O, CO₂ oder NH₃ verursacht eine Brennstoffverdünnung. Durch Erhöhung der Verdampfungsenthalpie und Reduzierung der effektiven Verbrennungsenthalpie kann dem Brand entgegengewirkt werden. Beispiele sind Aluminiumtrihydroxid (ATH), Magnesiumhydroxid (MDH) und borhaltige Verbindungen.

Inerte Füllstoffe ersetzen brennbares durch nicht brennbares Material und bewirken in Bezug auf die Brennbarkeit eine Verdünnung des brennbaren Materials.

Auch die Erfindung hat sich die Aufgabe gestellt, einen geeigneten Flammschutz für EPS und XPS zu entwickeln, der zeitgemäße Anforderungen erfüllt.

Dabei geht die Erfindung von der Erkenntnis aus, dass von den vielen bekannten Brandschutzmitteln nur wenige Brandschutzmittel ständig angewendet werden. Manche Brandschutzmittel sind bloßer papierner Stand der Technik. Dazu gehört unter anderem Lignin.

In der DE 102009050546 wird die Verwendung eines Flammschutzmittels/Brandschutzmittels im Zusammenhang mit faserverstärktem Polystyrol vorgeschlagen. Dabei soll es sich um Naturfasern von Pflanzen handeln. Allerdings sollen Pflanzen ausgewählt werden, die noch nicht verholzt sind, also nur eine geringe Menge oder gar keine Menge Lignin enthalten. Damit weist die Druckschrift nicht auf Lignin, sondern von Lignin weg.

Die WO 2011047804 stimmt inhaltlich mit der DE 102009050546 überein.

Auch die WO 2017118765 beschreibt eine Ausrüstung von Fasern mit Flammschutz/Brandschutz zur Verwendung in Polystyrol, auch in einem geschäumten Produkt. Im Unterschied zu den in DE102009050546 beschriebenen Fasern sind nach der WO2017118765 Lignin haltige Fasern vorgesehen.

Die DE 102017100313 stimmt inhaltlich mit der WO 2017118765 überein.

Die WO 2014184273 beschreibt zwar eine Polyolefinematrix mit einem eingemischten Lignin. Es handelt sich jedoch um einen Vorschlag zur Modifizierung von WPC (wood plastic composition), das als Holzersatz angesehen werden kann.

Die DE 102007054549 beschreibt auch eine Polyolefinmatrix für WPC mit einem eingemischten biobasierenden Kunststoff aus Lignin.

Die DE 2436166 aus dem Jahre 1974 beschreibt ein Flammschutzmittel für verschiedene Zwecke, unter anderem für den Schutz von Polystyrol. Der bekannte Flammschutz soll keine giftigen Gase bilden und lange Zeit anhalten. Der bekannte Flammschutz soll durch Schmelzen einer Ligninverbindung mit einer Harnstoffverbindung in der Hitze herstellbar ist. Als Ligninverbindung kommen Ligninsulfonsäure oder Ligninsulfonat in Frage. Als Harnstoffverbindung kommen Harnstoff oder Harnstoffderivate in Frage. Danach können die Massen mit einem thermoplastischen Kunststoff, einem Phosphorsäurederivat oder einem mehrwertigen Metallsalz vermischt werden. Die Ligninsulfonsäure (Lignosulfonsäure) kann hergestellt werden, indem man Lignin mit schwefliger Säure, Hydrogensulfit oder Sulfit umsetzt. Nach der DE2436166 können bei der Neutralisation der Ligninsulfonsäure Alkalimetallsalze und Erdalkalimetallsalze entstehen; zum Beispiel mit Na, K, Mg, Ca, Ba oder Ammoniumsalze.

Die vorgesehene Phosphorsäuren und Phosphorsäurederivate umfassen phosphorige Säure, unterphosphorige Säure, Phosphorsäure,

Metaphosphorsäure, Polymetaphosphorsäure, Polyphosphorsäure und Alkalimetallsalze oder Erdalkalimetallsalze.

Das Verhältnis der verschiedenen Bestandteile liegt im Bereich 0,3 bis 1,0 Gewichtsteil des Harnstoffs oder der Harnstoffverbindung auf 1 Gewichtsteil der Ligninsulfonsäure oder des Ligninsulfonats.

Der Einsatz von Lignin hat sich seitdem für Polystyrol nicht durchsetzen können.

Die Erfindung hat sich diesem seit 1974 bekannten Flammschutzmittel wieder zugewandt, um dieses Flammschutzmittel bei der Herstellung von Dämmplatten aus extrudiertem Polystyrolschaum zu verwenden.

Das wird mit den Merkmalen des Hauptanspruches erreicht.

Die Unteransprüche beschreiben bevorzugte Ausführungsbeispiele. Vorteilhaft sind folgende Merkmale:
- dass mindestens Lignin der Einsatzmischung zugesetzt wird, wobei der Anteil des Lignins mindestens 1 Gew% und höchstens 10Gew%, vorzugsweise höchstens 5 Gew% und noch weiter bevorzugt höchstens 3 Gew% beträgt, bezogen auf die Polystyrolmenge.
- dass der Einsatzmischung neben dem Lignin noch mindestens ein anderes Flammschutzmittel aus nachfolgender Gruppe von Flammschutzmitteln zugesetzt wird:
   - Kohlenstoffhaltige Flammschutzmittel (z.B. Blähgraphit)
   - Phosphorhaltige Flammschutzmittel (z.B. roter Phosphor)
   - Phosphorverbindungshaltige Flammschutzmittel (z.B. Triphenylphosphat, Ammoniumphosphat, Polyphosphate)
   - Stickstoffverbindungshaltige Flammschutzmittel (z.B. Melamincyanurat)
   - Metall-Oxide und/oder -Hydroxide (z.B. Aluminiumhydroxid, Böhmit, Magnesiumhydroxid)
   wobei die Zersetzungstemperatur derjenigen Flammschutzmittel, welche ihre flammhemmende Wirkung in der Hauptsache durch Zersetzung entwickeln, oberhalb der Verarbeitungstemperatur von Polystyrol liegt.
- die Verwendung von Blähgrafit als kohlenstoffhaltiges Flammschutzmittel und/oder durch die Verwendung von Magnesiumhydroxid oder Aluminiumhydroxid als Metall-Hydroxid. Eine Mindestmenge an Metallhydroxid von 2Gew%, vorzugsweise von 4Gew%, bezogen auf die Polystyrolmenge vorgesehen ist
- dass ein Blähgrafit verwendet wird, dessen Partikelgröße kleiner 1/10 des mittleren Zelldurchmessers des Polystyrolschaumes ist, vorzugsweise kleiner 1/50 und noch weiter bevorzugt kleine 1/100 des mittleren Zelldurchmesser des Polystyolschaumes ist.
- dass das Lignin und das Polystyrol unabhängig voneinander erwärmt werden und nach dem Aufschmelzen des Polystyrols eine Vermischung stattfindet
- durch eine Zwangsführung feinkörniger und staubförminger Flammschutzmittel/Brandschutzmittel bei der Aufgabe in den Extruder.
- durch die Verwendung eines senkrecht über der Füllöffnung des Extruders stehenden weiteren Extruders mit einer Kühlung zum Eintragen der Brandschutzmittel/Flammschutzmittel in den Extruder.
- eine Beheizung von in den Extruder eingefüllten feuchten Einsatzstoffen zur Verdampfung der Feuchte und anschließende Entfernung des Dampfes durch Entgasung.
- dass zunächst ein Masterbatch aus einem oder mehreren Flammschutzmitteln mit einer Teilmenge des Polystyrols in Granulatform erzeugt wird und anschließend mit den übrigen Einsatzstoffen im Extruder zusammen geführt wird
- dass die zur Masterbatcherzeugung verwendete Teilmenge des Polystyrols höchstens 30Gew%, vorzugsweise höchstens 20Gew% und noch weiter bevorzugt höchstens 10Gew% der Polystyrolgesamtmenge ist.

Wahlweise wird neben dem Lignin das an sich bekannte Aluminiumhydroxid (ATH) zugesetzt. Das ATH zersetzt sich im Brandfall und kühlt dabei das Feuer ab.

Die Verwendung von ATH ist an sich bekannt, auch zur Flammschutzausrüstung von Polystyrolschaum. Beispielhaft wird Bezug genommen auf die DE 2811951.

Die Verwendung von ATH bedingt eine kontrollierte Temperaturführung bei der Schaumherstellung unter der Zersetzungstemperatur.

Wahlweise wird anstelle oder zusätzlich zu dem ATH Blähgrafit zugesetzt.

Die Gesamtmenge an Lignin und zusätzlichen Flammschutzmittel/Brandschutzmittel ist vorzugsweise immer kleiner als die Menge an alleinigem Flammschutzmittel. Darin wird die synergistische Wirkung des Lignins auf die Flammschutzwirkung des Polystyrolschaums deutlich.

Das Blähgrafit erfährt im Brandfall eine große Ausdehnung und isoliert dadurch die Brandfläche vor dem weiteren Angriff von Flammen.

Das Blähgrafit führt nicht zugleich zu einer Ausdehnung der Polystyrolschaumplatten, wenn die Blähgrafitpartikel in ihren Abmessungen kleiner als der Zelldurchmessser des Polystryrolschaumes ist. Vorzugsweise ist der Durchmesser der Blähgrafitpartikel kleiner als 1/10 des Zelldurchmessers vom Polystyrolschaum, noch weiter bevorzugt kleiner als 1/50 des Zelldurchmessers und höchst bevorzugt kleiner als 1/100 des Zelldurchmessers. Der Zelldurchmesser ist der mittlere Zelldurchmesser.

Die vorstehend beschriebenen Blähgrafitpartikel können bei der Schaumherstellung gut in die Zellwände eingebaut werden und sich in den Zellinnenraum ausdehnen, so dass sich in der Fassade nicht so ausdehnen, dass ein Absprengen von Fassadenteilen zu erwarten ist.

Anstelle von oder zusätzlich zu Metallhydroxid und/oder Blähgraphit können auch Substanzen aus folgender Aufstellung ausgewählt werden:
- Bimsgestein, Blähton
- Fasern aus Glas oder Keramik
- feuerfester Mörtel
- Kreide, Kalk, Gips
- Feuerstein/Siliziumdioxid
- Silikaten (z.B. Montmorillorit, Bentonit, Kaolin)
- Mikroglaskugeln
- Phosphor (rot), Phosphorverbindungen, Phosphorester Dieser Phosphor mit einem Schmelzpunkt von 44 Grad Celsius lässt bei der Pyrolyse von Thermoplasten nicht brennbare Gase entstehen.

In der kondensierten Phase können phosphorhaltige Flammschutzmittel die Verkohlung fördern. Der Phosphor wird vorzugsweise in Granulatform zugegeben, wobei jeder Granulat-Partikel mit Kunststoff umhüllt ist und ein Kunststoff mit deutlich höherem Schmelzpunkt als Polystyrol gewählt ist.
- Schamotte
- Schwefel (gelb)

Auch der Schwefel wird vorzugsweise in Gramulatform zugegeben, wobei jeder Granulat-Partikel mit Kunststoff umhüllt ist und ein Kunststoff mit deutlich höherem Schmelzpunkt als Polystyrol gewählt ist. Dieser Schwefel mit einem Schmelzpunkt von 115 Grad Celsius hat eine ähnliche Funktion wie Phosphor
- Talkum
- Vermiculit

Vermiculit mit einem Schmelzpunkt über 1300 Grad Celsius ist inertes Material. Es schwächt die Brennstoffkettenreaktion. Lokale Orte des Vermiculit bleiben erhalten.
- Wasserglas

Das Lignin wird aus Holz gewonnen. Es füllt die Zwischenräume zwischen den Cellulosefasern des Holzes. Bei der Cellulose-Gewinnung ist das Lignin ein Nebenprodukt. Je nach Verfahren bei der Cellulose-Gewinnung ist das Lignin gar nicht oder in erheblichem Umfang mit Salzen belastet.

Ein verunreinigungsfreie Gewinnungsverfahren ist ein mechanisches Verfahren, bei dem das Holz an Schleif- und Mahlsteinen zermahlen wird.

Bei einem anderen verunreinigungsfreien Verfahren (Refiner-Verfahren) wird das Holz zwischen Walzenpaaren zermahlen, die das Holz schneiden als auch pressen. Dies kann ohne chemische Vorbehandlung erfolgen.

Bei chemischer Vorbehandlung wird zum Beispiel Natriumsulfit oder Nartriumhydroxid eingesetzt.

Die meist angewendeten Verfahren zur Cellulose-Gewinnung sind chemische Verfahren. Dazu gehören Sulfatverfahren, Sulfitverfahren und Sodaverfahren. Bei anderen, weniger häufig angewendeten Verfahren wird Ethanol und Natronlauge oder Natriumsulfit und Ethanol oder Essigsäure und Ameisensäure oder Ameisensäure und Wasserstoffperoxid angewendet oder erfolgt ein enzymatischer Aufschluß.

Das Lignin fällt feinkörnig an, zum Teil pulverförmig. Nach der Erfindung wird das Eintragen des Lignins in den Extruder durch ein Stopfwerk in dem Aufgabetrichter des Extruders unterstützt. Im einfachsten Fall ist das Stopfwerk ein Rührer. Die Förderwirkung der bekannten Rührer ist gering. Vorzugsweise findet ein aufrechtstehender Extruder als Stopfwerk Anwendung, nachfolgend Stopfextruder genannt. Der Stopfextruder kann unmittelbar an das Extrudergehäuse angeflanscht werden. Die Förderwirkung des Stopfextruders ist um Vieles besser als die Förderwirkung eines Rührers. Hinzu kommt, dass der Stopfextruder bereits mit einer Kühlvorrichtung versehen ist, Die Kühlvorrichtung wirkt einem durch Wärme verursachten Verklumpen des Lignins im Einlauf des zur Verarbeitung der Einsatzstoffe vorgesehenen Extruders entgegen.

Vorzugsweise findet mechanisch/thermisch gewonnenes Lignin Anwendung, das frei von Verunreinigungen ist.

Bei Lignin mit Verunreinigungen erfolgt vorzugsweise vor dem Einsatz in dem Extruder eine Reinigung von allen Bestandteilen, die für die

Polystyrolmischung, den Schaum und den Flammschutz von Nachteil sind. Vorzugsweise wird das Lignin dabei gewaschen.

Das Lignin fällt zumeist mit erheblicher Feuchte an, die im Extruder verdampft und abgezogen werden kann. Dazu eignen sich besonders modulweise aufgebaute Extruder. Dann kann zunächst in einen ersten Modul zumindest allein das feuchte Lignin eingefüllt und auf eine Temperatur gebracht werden, bei der die Feuchtigkeit gut abdampft aber das Lignin noch nicht erweicht. Vorzugsweise liegt diese Temperatur mindestens 10 Grad Celsius unter der Erweichungstemperatur des jeweiligen Lignins, noch weiter bevorzugt mindestens 20 Grad Celsius und höchst bevorzugt mindestens 30 Grad Celsius unter der Erweichungstemperatur des jeweiligen Lignins.

Das Abziehen des Dampfes wird als Entgasen bezeichnet. Im einfachsten Fall ist dazu eine an den Extruder angeflanschte Saugleitung ausreichend. Soweit das Lignin dazu neigt, unter der Saugwirkung des Saugzuges dem Dampf bei seinem Weg aus dem Extruder zu folgen, empfiehlt es sich, an der Öffnung für den Saugzug im Extrudermantel ein Sieb anzuordnen. Von Vorteil ist, wenn das Sieb mit der Innenseite des Extruders bündig abschließt. Dann bewirkt die Schnecke in diesem Modul zugleich eine Reinigung des Siebes. Gegebenenfalls ist sogar ein geringes (zum Beispiel bis 2mm) Zurücksetzen des Siebes gegenüber der Innenfläche von Vorteil. Dann sammelt sich vor dem Sieb eine definierte Schicht getrockneten Lignins, das als zusätzliche Filterschicht wirkt.

Das erste Modul ist vorzugsweise wie ein Einschneckenextruder gestaltet.

Nach dem Entgasen des Lignins in einem ersten Modul wird das Lignin vorzugsweise in einem weiteren Modul mit dem Polystyrol zusammengebracht.

Das Polystyrol kann in Granulatform in den Extruder aufgegeben werden. Dann hilft die in dem Extruder befindliche Ligninmenge bei der zum Aufschmelzen des Polystyrols erforderlichen Erwärmung.

Besser ist, wenn das Polystyrol in schmelzflüssiger Form in den weiteren Modulen eingetragen wird. Vorzugsweise geschieht das dann über einen Seitenarmextruder, der zugleich die Schmelzleistung aufbringt. Der Seitenarmextruder hat seine Bezeichnung davon, dass er wie ein seitlicher Arm an dem Modul des Hauptextruders angeordnet ist. Der Hauptextruder ist der Extruder bzw. der modulweise aufgebaute Extruder, in dem die Mischung von Polystyrol und Lignin stattfindet.

Üblicherweise werden auch die Extruder als Seitenarmextruder bezeichnet, die oben auf oder unten an dem Modul des Hauptextruders angeflanscht sind.

Zusammen mit dem Polystyrol können auch Additive und weitere Zuschläge in dem zweiten Modul aufgegeben werden.

Der Seitenarmextruder kann sowohl in seitlicher Anordnung als auch in senkrechter Anordnung auf dem Modul als Doppelschneckenextruder ausgebildet sein.

In dem zweiten Modul und/oder in einem weiteren Extrudermodul findet eine Mischung/Dispergierung des eingebrachten Lignins, der Additive und Zuschläge in der Schmelze statt. Für diese Aufgabe sind Module besonders geeignet, die wie Planetwalzenextruder gestaltet sind. Dabei setzt sich die Einschnecke aus dem ersten Modul als Zentralspindel in dem zweiten bzw. weiteren Modul fort. Bei der Verwendung einer Planetwalzenextruderbauart für den zweiten Modul und/oder den weiteren Modul kann die Korngröße des Lignin und aller anderen Feststoffe so gewählt werden, dass das Lignin durch diese Module hindurch geht. Das ist der Fall bei den oben wiedergegebenen üblichen Lignin-Korngrößen und bei größeren Planetwalzenextruderbaugrößen , die ein größeres Spiel zwischen den bewegten Teilen besitzen.

Aber auch größere Ligninpartikel lassen sich im Planetwalzenextruder verarbeiten. Das gilt insbesondere nach Erwärmung des Lignins auf Erweichungstemperatur. Größere Ligninpartikel lassen sich auch im Planetwalzenextruder zerkleinern.

Je feiner die Korngröße des Lignins ist, desto leichter und besser dispergiert das Lignin in der Polystyrolschmelze.

Bei der Extrusion von Polystyrolschaum wird der Schmelze auch ein Treibmittel oder mehrere Treibmittel zugesetzt. Das bzw. die Treibmittel werden dem Extruder in flüssiger oder superkritischer Form zugegeben. Diesen Aggregatzustand erreicht man dadurch, dass man das Treibmittel vor der Zugabe in den Extruder unter Druck setzt.

Das Treibmittel wird üblicherweise zwischen zwei Planetwalzenextrudermodulen mittels eines Ringes in die Schmelze eingedüst. Der Ring ist entsprechend hohl ausgebildet und an den schmelzeberührten Flächen mit Austrittsöffnungen für die Treibmittelflüssigkeit versehen. Die Treibmittelflüssigkeit wird durch eine Leitung zugeführt, die in dem Spalt zwischen den beiden Planetwalzenextrudermodulen zu dem Ring verläuft. Unter dem im Planetwalzenextrudermodul herrschenden Druck wird das Treibmittel an einer Ausdehnung gehindert und von den umlaufenden Planetspindeln und der Zentralspindel in der Schmelze fein verteilt. Anschließend wird die Schmelze durch eine oder mehrere Düsen hindurch aus dem Extruder gedrückt.

Bei einer einzigen nachgeordneten Düse ist die Düse eine Schlitzdüse. Der aus der Schlitzdüse in die Umgebungsluft austretende Schmelzestrang schäumt um ein Vielfaches auf. Dabei findet die aufschäumende Schmelze an den Innenwänden des dem Extruder nachgeschalteten Kalibrators eine Grenze. An den Innenwänden bildet sich eine Haut an dem Schmelzestrang. Die Haut stabilisiert den Schmelzestrang nach Verlassen des Kalibrators bei der Abkühlung.

Nachfolgende Tabellen beinhalten eine Auflistung von Wirksubstanzen, Eigenschaften und Ergebnisse von Brandtests.

Zu den Brandschutzmitteln, die in Verbindung mit Lignin zum Einsatz gekommen sind, gehören Blähgraphit, Aluminiumhydroxid (ATH), Magnesiumhydroxid (MDH). Die verschiedenen Brandschutzmittel wurden in einem Planetwalzenextruder mit Polystyrol zu Polystyrolmasterbatchen verarbeitet.

Die Masterbatche wurden im Weiteren zu Polystyrolhartschaumplatten extrudiert.

Zum einem wurde auf einer XPS-Produktionsanlage (mit einer Leistung von 300 kg je Stunde) XPS-Platten unter Verwendung von 2 Gew% Lignin und 4 Gew% Magnesiumhydroxid (MDH) hergestellt. Die Gew% beziehen sich auf die eingesetzte Polystyrolmenge (Tabelle 2).

Zum anderen wurden die Flammschutzmittel- und Ligninmasterbatche in einem Einschneckenextruder mit einem Schneckendurchmesser von 60 mm und einem L/D-Verhältnis (Verhältnis von Schneckenlänge zu Schneckendurchmesser) von 40 erwärmt und unter Druck gesetzt, so dass das Polystyrol aufgeschmolzen wurde, während die Brandschutzmittel nicht reagiert haben. In die Schmelze wurde dann unter Druck flüssiges CO₂ und Ethanol zugegeben und die Schmelze homogenisiert.

Die Schmelze wird vor dem Austritt aus dem Extruder noch in einem temperierten statischen Mischer vergleichmäßigt und auf Austrittstemperatur gekühlt. Der Schmelzeaustritt erfolgt durch eine Breitschlitzdüse. Die Breitschlitzdüse hat eine Schlitzbreite von 80mm und einen einstellbaren Düsenspalt von 0,8 bis 1,5mm. Nach dem Verlassen der Düse schäumt die Schmelze in der umgebenden Atmosphäre bei Umgebungsdruck auf. Zugleich wird die Schmelze von einem Kalibrator aufgenommen. In dem Kalibrator wird die Dicke des Schmelzestranges auf 10 bis 20mm beschränkt. Die Platten entstehen nach Besäumen des abgekühlten Schmelzstranges und durch dessen Ablängen.

Der Ausstoß der Anlage betrug 12 kg pro Stunde.

Die hergestellten Platten wurden einem Brandtest für die Euroklasse E (entsprechend DIN EN 13501-1) zugeführt (Tabelle 1).

Die Prüfung nach der DIN EN ISO 11925-2 "Prüfungen zum Brandverhalten - Entzündbarkeit von Produkten bei direkter Flammeneinwirkung" dient der Bestimmung des Brandverhaltens. Bei dieser Prüfung wird die Entzündbarkeit von Produkten bei einer direkt einwirkenden kleinen Flamme ohne zusätzliche Wärmestrahlung bestimmt, wobei die Probekörper in vertikaler Anordnung geprüft werden.

Die Entzündbarkeit von Produkten wird bestimmt, indem die Ausbreitung einer kleinen Flamme an der vertikalen Oberfläche eines Probekörpers ermittelt wird, nachdem eine kleine Flamme (in Streichholzgröße) an die Kante des Probekörpers für 15 Sekunden gehalten wurde. Das Auftreten von brennendem Abtropfen wird bestimmt, indem beobachtet wird, ob sich das unter dem Probekörper angeordnete Filterpapier entzündet oder nicht.

Die Ergebnisse sind in der Tabelle 1 zusammengefasst.

Ferner wurde ein Vergleichstest mit Platten durchgeführt, die sich von den Platten der Tabelle 1 durch handelsübliches polyFR (bromhaltiges Flammschutzmittel) unterscheiden.

Die Ergebnisse sind in der Tabelle 2 aufgelistet.

Daraus ergibt, dass das erfindungsgemäße Flammschutzmittel eine vorteilhafte Alternative zu herkömmlichen bromhaltigen Flammschutzmitteln bildet.

Wie oben schon erläutert, lassen sich Polystyrolschaumplatten auch aus Polystyromschaumpartikeln herstellen, die durch Extrusion und Granulierung entstehen.

In diesem Fall wird eine Vielzahl nachgeordneter Düsen genutzt, um eine entsprechende Anzahl von feinen Schmelzesträngen herzustellen, die anschließend in geringen Abständen abgelängt werden, so dass ein Granulat entsteht, das als Ausgangsstoff für weitere Bearbeitungsvorgänge dient. Die Granulierung erfolgt unter Druck und unter Wasser, so dass das Treibmittel in dem Schmelzegranulat nicht aufschäumt und man so treibmittelbeladene Polystyrolschaumpartikel (PS-Beads) erhält. Zugleich bewirkt das Wasser, dass die einzelnen Partikel schnell abkühlen und nicht miteinander verklumpen. Das Granulat hat wahlweise einen Durchmesser von höchsten 1,5mm, weiter vorzugsweise von höchstens 1mm und weiter bevorzugt von höchstens 0,8mm. Günstiger können noch kleinere Durchmesser von zum Beispiel höchstens 0,6mm sein.

Die so gewonnenen Partikel, die ein Treibmittel enthalten, können in transportfreundlicher und lagerfreundlicher Form an Abnehmer geliefert werden, um dort zu Blöcken aufgeschäumt zu werden oder in Formteilautomaten zu Formteilen verarbeitet zu werden, die ohne weitere Bearbeitung eine Anwendung erfüllen können, zum Beispiel im Verpackungsbereich.

Die Blöcke werden nach entsprechender Ablagerung zu Platten geschnitten, die zu Bauzwecken verwendet werden.

**Tabelle 1**

| **MDH :** | **ATH** | **Lignin** | **Blähgraphit** | Euroklasse E (entsprechend DIN EN 13501-1) | | |
|---|---|---|---|---|---|---|
| | | | | Meßmarke erreicht Sekunden | brennendes Abtropen | Klasse E erüllt |
| *[%]* | *[%]* | *[%]* | *[%]* | ja/nein | ja/nein | ja/nein |
| **0** | 0 | 0 | 0 | nein | ja | nein |
| **0** | 4 | 0 | 0 | ja (11) ja (11) | ja | nein |
| **0** | 8 | 0 | 0 | ja (12) | ja | nein |
| **0** | 8 | 0 | 4 | Ja (5) | ja | nein |
| **0** | 0 | 0 | 3 | Ja (12) | ja | nein |
| **0** | 0 | 0,5 | 0 | ja (15) | ja | nein |
| **0** | 0 | 1 | 0 | ja (14) | nein | nein |
| **0** | 8 | 0,5 | 0 | ja (8) | ja | nein |
| **0** | 4 | 1 | 0 | ja (8) | ja | nein |
| **0** | 8 | 1 | 0 | ja (7) | ja | nein |
| **0** | 0 | 1 | 2,5 | ja (15) | ja | nein |
| **0** | 0 | 1 | 5 | ja (14) | ja | nein |
| **0** | 0 | 1 | 2,5 | ja (11) | ja | nein |
| **4** | 0 | 2 | 0 | nein | nein | ja |
| **0** | | 2 | 0 | nein | nein | ja |
| **8** | 0 | 4 | 4 | nein | nein | ja |
| **4** | 0 | 4 | 0 | nein | nein | ja |
| **0** | 0 | 10 | 0 | nein | ja | nein |
| **0** | 1 | 10 | 0 | nein | ja | nein |

**Tabelle 2**

| **Probe** | **Einheit** | **Vergleichsmuster** | **Probe entsprechend dieser Anmeldung** |
|---|---|---|---|
| **Flammschutzmittel** | % | polyFR 2% | Lignin 2% |
| | | | MDH 4% |
| **Dicke** | mm | 20,2 | 19,8 |
| **Dichte** | kg/m3 | 38 | 39 |
| **Lambda** | mW/mK | 29,9 | 30,1 4 |
| **Druckfestigkeit** | kPa | 421 | 582 |
| **Geschlossenzelligkeit** | % | 99 | 99 |
| **Euroklasse E** | | bestanden | bestanden |

In anderen Ausführungsbeispielen liegt der Ligningehalt in den XPS-Platten unter 5Gew%, bezogen auf die Polystyrolmenge.

## Patentansprüche

**1.** Herstellung flammgeschützter/brandgeschützter Polystyrolschaumplatten, wobei die Polystyrolschaumplatten für Bauzwecke
- durch Einführen von Einsatzstoffen, einschließlich Polystyrol
- durch Aufschmelzen des Polystyrols,
- durch Einführen eines oder mehrerer Treibmittel in flüssiger/superkritischer Form
- durch Mischen der Schmelze mit den anderen Einsatzstoffen,
- durch Austragen der Schmelze durch eine Düse in eine Umgebung mit geringerem Druck in einen Kalibrator unter Aufschäumung der Schmelze,
- durch Bildung eines Extrusionsstranges
- durch Abkühlen des Schmelzestranges und Bearbeitung des Extrusionsstranges,
- durch Ablängen des Extrusionsstranges erzeugt werden
**oder**
- durch Einführen von Einsatzstoffen, einschließlich Polystyrol Aufschmelzen des Polystyrols ,
- durch Einführen eines oder mehrerer Treibmittel in flüssiger/superkritischer Form
- durch Mischen der Schmelze mit den anderen Einsatzstoffen
- durch Austragen der Schmelze durch eine Vielzahl kleiner Düsen als dünne Schmelzestränge in eine Umgebung mit hohem Druck und durch Zerkleinerung der Schmelzestränge im Wege der Unterwassergranulierung,
- Aufschäumen des Granulates vor der Einführung in einen Formteilautomaten
- Verschweißen oder Versintern der entstandenen Schaumpartikel im Formteilautomaten zu Blöcken
- Aufteilen der Blöcke zu Platten
**dadurch gekennzeichnet,**
**dass** mindestens Lignin der Einsatzmischung zugesetzt werden, wobei der Anteil des Lignins mindestens 1 Gew% und höchstens 10Gew%, vorzugsweise höchstens 5 Gew% und noch weiter bevorzugt höchstens 3 Gew% beträgt, bezogen auf die Polystyrolmenge.

**2.** Herstellung nach Anspruch 1,
**dadurch gekennzeichnet, dass** der Einsatzmischung neben dem Lignin noch mindestens ein anderes Flammschutzmittel aus nachfolgender Gruppe von Flammschutzmitteln zugesetzt wird:
- Kohlenstoffhaltige Flammschutzmittel
- Phosphorhaltige Flammschutzmittel
- Phosphorverbindungshaltige Flammschutzmittel
- Stickstoffverbindungshaltige Flammschutzmittel
- Metall-Oxide und/oder -Hydroxide
wobei die Zersetzungstemperatur derjenigen Flammschutzmittel, welche ihre flammhemmende Wirkung in der Hauptsache durch Zersetzung entwickeln, oberhalb der Verarbeitungstemperatur von Polystyrol liegt.

**3.** Herstellung nach Anspruch 2,
**gekennzeichnet durch** die Verwendung von Blähgrafit als kohlenstoffhaltiges Flammschutzmittel und/oder durch die Verwendung von Magnesiumhydroxid oder Aluminiumhydroxid als Metall-Hydroxid.

**4.** Herstellung nach Anspruch 2 oder 3,
**gekennzeichnet durch** eine Mindestmenge an Metallhydroxid von 2Gew%, vorzugsweise von 4Gew%, bezogen auf die Polystyrolmenge.

**5.** Herstellung nach einem der Ansprüche 2 bis 4,
**dadurch gekennzeichnet,**
**dass** ein Blähgrafit verwendet wird, dessen Partikelgröße kleiner 1/10 des mittleren Zelldurchmessers des Polystyrolschaumes ist, vorzugsweise kleiner 1/50 und noch weiter bevorzugt kleine 1/100 des mittleren Zelldurchmesser des Polystyolschaumes ist.

**6.** Herstellung nach einem der Ansprüche 1 bis 5,
**dadurch gekennzeichnet,**
**dass** das Lignin und das Polystyrol unabhängig voneinander erwärmt werden und nach dem Aufschmelzen des Polystyrols eine Vermischung stattfindet.

**7.** Herstellung nach einem der Ansprüche 1 bis 6,
**gekennzeichnet durch** eine Zwangsführung feinkörniger und staubförminger Flammschutzmittel/Brandschutzmittel bei der Aufgabe in den Extruder.

**9.** Herstellung nach Anspruch 7, **gekennzeichnet durch** die Verwendung eines senkrecht über der Füllöffnung des Extruders stehenden weiteren Extruders mit einer Kühlung zum Eintragen der Brandschutzmittel/Flammschutzmittel in den Extruder.

**10.** Herstellung nach einem der Ansprüche 1 bis 8, **gekennzeichnet durch** eine Beheizung von in den Extruder eingefüllten feuchten Einsatzstoffen zur Verdampfung der Feuchte und anschließende Entfernung des Dampfes durch Entgasung.

**11.** Herstellung nach einem der Ansprüche 1 bis 10, **dadurch gekennzeichnet, dass** zunächst ein Masterbatch aus einem oder mehreren Flammschutzmitteln mit einer Teilmenge des Polystyrols in Granulatform erzeugt wird und anschließend mit den übrigen Einsatzstoffen im Extruder zusammen geführt wird.

**12.** Herstellung nach Anspruch 11, **dadurch gekennzeichnet, dass** die zur Masterbatcherzeugung verwendete Teilmenge des Polystyrols höchstens 30Gew%, vorzugsweise höchstens 20Gew% und noch weiter bevorzugt höchstens 10Gew% der Polystyrolgesamtmenge ist.
